# EUROPEAN PATENT APPLICATION

(11) **EP 2 515 562 A1**
(43) Date of publication of application: **24.10.2012**
(21) Application number: 10843737.7
(22) Date of filing: 02.11.2010
(51) Int. Cl.: H04W 8/08

(54) **METHOD AND SYSTEM FOR ACQUIRING MOBILITY RELATED INFORMATION OF EQUIPMENT AND OPTIMIZING CONFIGURATION**

(30) Priority: 22.01.2010 CN 201010100113
(71) Applicant: ZTE Corporation, Shenzhen, Guangdong 518057 (CN)
(72) Inventor: HUANG, Chun, Shenzhen Guangdong 518057 (CN); HUANG, He, Shenzhen Guangdong 518057 (CN)
(74) Representative: Brunner, John Michael Owen
(86) International application number: PCT/CN2010/078345
(87) International publication number: WO 2011/088697

(57) **Abstract**

A method for acquiring mobility related information of an equipment is disclosed in the present invention. The method is used for acquiring the mobility related information of Machine Type Communication (MTC) equipment. The method includes: the MTC equipment reporting its own mobility related information to an access network; or, the access network acquiring the mobility related information of the MTC equipment from a core network or a MTC server that stores the mobility related information of the MTC equipment. A method for optimizing the configuration of the MTC equipment, a MTC equipment and an access network equipment are also disclosed in the present invention. With the present invention, the access network can acquire the mobility related information of the MTC equipment, thus enabling the configuration optimization such as reducing unnecessary measurement, mobility management, and so on.

## Description

### Technical Field

The present invention relates to the field of wireless communications, and more especially, to a method and system for acquiring mobility related information of equipment and optimizing the configuration.

### Background of the Related Art

Machine to Machine (M2M) generally refers to communication between machines, which integrates the sensor network and the wireless communication technology, and is a network application and service that takes the intelligent interaction of the machine terminals as the key point. The M2M takes a variety of communication means as the access means to provide the customers with information technology solutions to meet the customers' demand for information technologies such as monitoring, directing, scheduling, data collection, measurement, and so on.

The development of wireless technology is an important factor in the M2M market development. The wireless technology breaks through the time and space constraints and the geographical barriers of the traditional communication means so that the enterprises and the public can get rid of the constraints of cable, thus the customers can more effectively control costs, reduce installation costs and the use is simple and convenient. In addition, the growing demand drives the M2M to continuously develop, and what conflicts with the information processing capacity and the continuous growth of the network bandwidth is that the information acquisition means lag far behind the information processing capacity and the network bandwidth, while the M2M enhances the information acquisition means, which well meets people's demand for acquiring the information. Through the M2M, the public can monitor the external environment in real time to realize a wide range of automated information collection. Therefore, the M2M can be applied to industrial applications, home applications, as well as personal applications. The industrial applications are such as: traffic monitoring, alarm systems, marine rescue, vending machines, car payment, and so on. The home applications are such as: automatic meter reading, temperature control, and so on. The personal applications are such as: life detection, remote diagnostics, and so on.

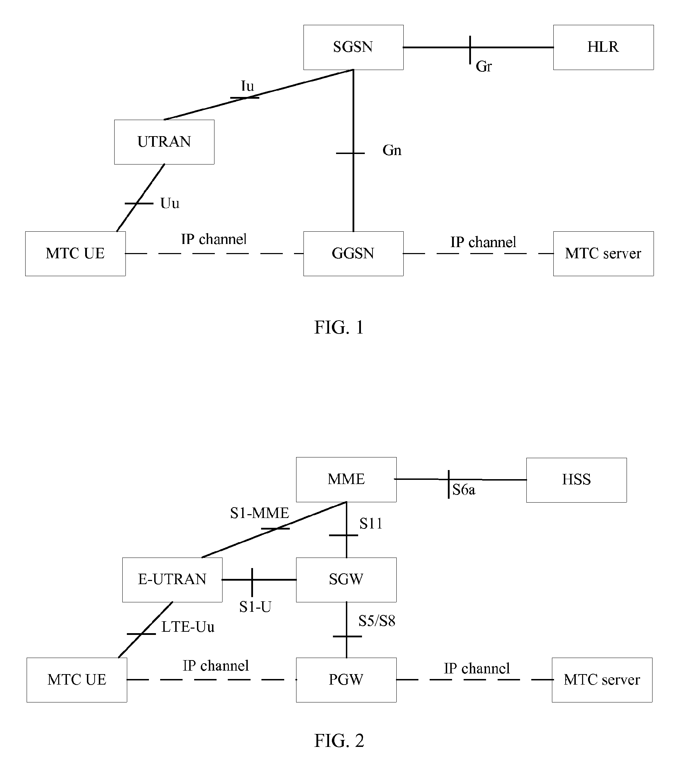

The M2M communication objects are machine to machine, or man to machine. The data communication between one or more machines is defined as the Machine Type Communication (MTC), and in this case, the man-machine interaction is less needed. The machine participating in the MTC is defined as the MTC equipment. The MTC equipment is the MTC user equipment (MTC UE), and it can communicate with the MTC equipment and the MTC server through the Public Land Mobile Network (PLMN). The Mobile Equipment (ME) is a function block attached to the MTC equipment, and this function block is used to access the MTC equipment to the mobile communication system. The MTC Server manages and monitors the MTC equipment. FIGs. 1 and 2 are diagrams of the MTC equipment accessing to the core network (CN) via the Universal Terrestrial Radio Access Network (UTRAN) and the Evolved Terrestrial Radio Access Network (E-UTRAN) respectively in the prior art.

### Summary of the Invention

Since most of the MTC equipments are specific application equipments, the MTC equipments of different applications, such as sensors, cameras, meters and other equipments, have different characteristics, they are placed somewhere fixedly in most scenarios, and almost have no demand for mobility. Therefore, for these equipments, reducing the unnecessary measurement and mobility management etc. so as to reduce the power consumption of the equipments and the impact on the network is a problem that must be considered. For such application scenarios, first, the access network needs to know the mobility related information of the MTC equipment in order to make a different optimization for different mobility. In the prior art, however, there are no appropriate solutions proposed for the aforementioned problem.

The technical problem to be solved in the present invention is to provide a method and system for acquiring mobility related information of an equipment and optimizing configuration, to make an access network acquire mobility related information of the MTC equipment, so as to optimize the configuration.

In order to solve the aforementioned technical problem, the present invention provides a method for acquiring mobility related information of an equipment to obtain a MTC equipment, and the method comprises:
the MTC equipment reporting the mobility related information thereof to an access network; or
the access network acquiring the mobility related information of the MTC equipment from a core network or a MTC server that stores the mobility related information of the MTC equipment.

The access network is a Universal Terrestrial Radio Access Network (UTRAN) or an Evolved Universal Terrestrial Radio Access Network (E-UTRAN).

The step of the MTC equipment reporting the mobility related information thereof to an access network comprises:
the MTC equipment initiating a Radio Resources Control (RRC) connection establishment request or a RRC connection establishment completion message to the access network, wherein, the request and the message include the MTC equipment's own mobility related information.
The mobility related information comprises: a level of the mobility related information;
the level of the mobility related information of the MTC equipment is one of the following types:
   static, moving with low speed, moving with normal speed, and moving with high speed.

The method further comprises:
when the mobility related information of the MTC equipment changes, the MTC equipment notifying one or more of the access network, the core network and the MTC server of the new mobility related information.

In order to solve the above technical problem, the present invention also provides a method for optimizing configuration of a machine type communication (MTC) equipment, applied to dynamically optimize the configuration of the MTC equipment, and the method comprises:
the MTC equipment reporting mobility related information thereof to an access network; or the access network acquiring the mobility related information of the MTC equipment from a core network or a MTC server that stores the mobility related information of the MTC equipment; and
the access network configuring configuration parameters of the MTC equipment according to the obtained mobility related information of the MTC equipment; wherein,
the configuration parameters comprises one or more of measurement cycle, location updating cycle and routing area update cycle.

The step of the MTC equipment reporting mobility related information thereof to an access network comprises:
the MTC equipment initiating a Radio Resources Control (RRC) connection establishment request or a RRC connection establishment completion message to the access network, wherein the request and the message includes the MIT equipment's own mobility related information.
The mobility related information comprises: a level of the mobility related information;
the level of the mobility related information of the MTC equipment is one of the following types:
   static, moving with low speed, moving with normal speed, and moving with high speed.

When the configuration parameters comprise measurement cycle, location updating cycle and routing area update cycle:
if the access network knows that the level of the mobility related information of the MTC equipment is static, the access network configures the measurement cycle of the MTC equipment as infinite, and sets the MTC equipment as not reporting the location update or routing area update;
if the access network knows that the level of the mobility related information of the MTC equipment is moving with low speed, the access network configures the MTC equipment as using relatively large measurement cycle, location updating cycle, and routing area update cycle; if the access network knows that the level of mobility related information of the MTC equipment is moving with normal speed, the access network configures the MTC equipment as using configuration parameters of a mobile terminal with normal speed;
if the access network knows that the level of the mobility related information of the MTC equipment is moving with high speed, the access network configures the MTC equipment as using the configuration parameters of a mobile terminal with high speed.

The method further comprises:
when the mobility related information of the MTC equipment changes, the MTC equipment notifying new mobility related information to one or more of the access network, the core network and the MTC server;
the access network acquiring the new mobility related information, and according to the obtained new mobility related information, reconfiguring the configuration parameters of the MTC equipment.

In order to solve the above technical problem, the present invention also provides a Machine type communication (MTC) equipment, comprising:
a receiving module, configured to: receive configuration parameters of the MTC equipment configured by an access network and sent to the MTC equipment by the access network according to mobility related information of the MTC equipment, wherein the configuration parameters comprise one or more of the measurement cycle, the location updating cycle and the routing area update cycle; and
a using module, configured to: the MTC equipment is used to report the mobility related information thereof to the access network; use the access network to receive the configuration parameters.

The MTC equipment further comprises:
a reporting module, configured to: report the MIC equipment's own mobility related information to the access network.

An access network equipment, comprising:
an information acquisition module, configured to acquire mobility related information of a Machine type communication (MTC) equipment from the MTC equipment, or a core network or a MTC server that stores the mobility related information of the MTC equipment;
a configuration module, configured to: configure configuration parameters of the MTC equipment based on obtained mobility related information of the MTC equipment; and
a sending module, configured to: send the configuration parameters of the MTC equipment to the MTC equipment; wherein, the configuration parameters comprise: one or more of measurement cycle, location updating cycle, and routing area update cycle.

The present invention enables the access network to acquire the mobility related information of the MTC equipment, so as to perform configuration optimization such as reducing unnecessary measurement, mobility management, and so on.

### Brief Description of Drawings

FIG. 1 is a schematic diagram of the MTC equipment accessing the CN through the UTRAN;
FIG. 2 is a schematic diagram of the MTC equipment accessing the CN through the E-UTRAN;
FIG. 3 is a schematic diagram of a first embodiment of the present invention;
FIG. 4 is a schematic diagram of a second embodiment of the present invention;
FIG. 5 is a schematic diagram of a third embodiment of the present invention.

### Preferred Embodiments of the Present Invention

The present invention provides a method for an access network acquiring the mobility related information of MTC equipment, and provides different dynamic optimization configuration solutions for different mobility related information.

The present invention is applicable to the UTRAN network and the E-UTRAN network.

There are two solutions for the access network acquiring the mobility related information of the equipment, one is that the MTC equipment reports its mobility related information to the access network; the other is that the access network acquires the mobility related information of the MTC equipment from the core network or the MTC server that stores the mobility related information of the MTC equipment.

The access network is the UTRAN or the E-UTRAN.

Preferably, the mobility related information comprises: the level of the mobility related information; wherein
the level of the mobility related information of the MTC equipment is one of the following types:
static, moving with low speed, moving with normal speed, or moving with high speed.

The access network configures the configuration parameters of the MTC equipment based on the obtained mobility related information of the MTC equipment; specifically, according to different levels of the mobility related information of the MTC equipment, the access network can perform different configuration optimizations.

Wherein, the configuration parameters comprises one or more of the measurement cycle, the location updating cycle and the routing area update cycle.

When the mobility related information of the MTC equipment changes, the MTC equipment notifies one or more of the access network, the core network and the MTC server of the new mobility related information; based on the obtained new mobility related information, the access network reconfigures the configuration parameters of the MTC equipment.

The present invention will be described in detail in the following in combination with the accompanying drawings and the specific embodiments.

### The first embodiment:

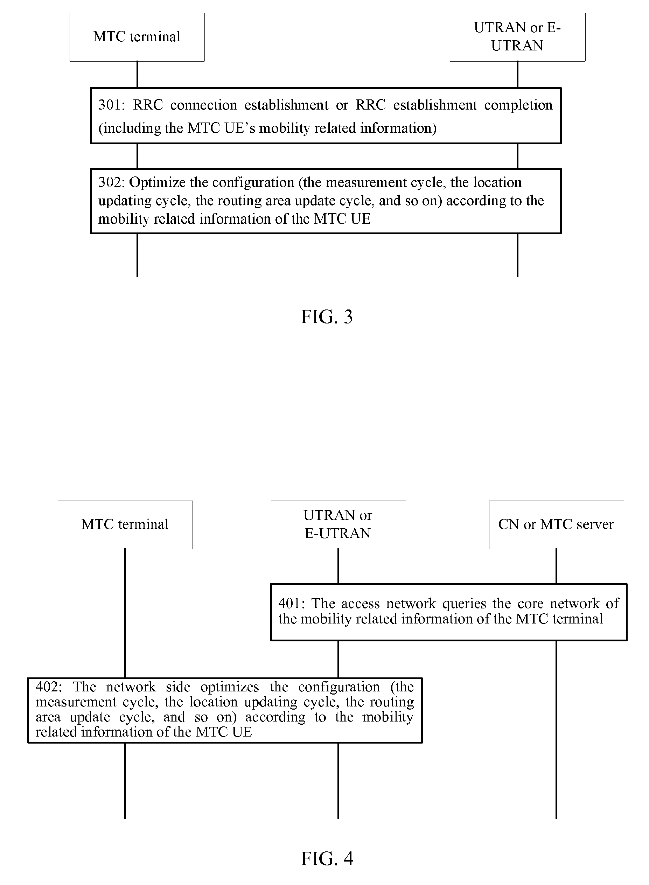

FIG. 3 is a diagram of the MTC equipment reporting its own mobility related information to the access network, and the process comprises the following steps specifically:
step 301: the MTC equipment initiates a Radio Resources Control (RRC) connection establishment request or a RRC connection establishment completion message to the UTRAN or the E-UTRAN, where the request and the message include the mobility related information of the MTC equipment;
step 302: the UTRAN or the E-UTRAN parses the RRC establishment request or the RRC connection establishment completion message to acquire the mobility related information of the MTC equipment, and optimizes the configuration of the MTC equipment according to the different levels of mobility-related information; for example: when the MTC equipment does not move (the level of the mobility related information is static), the access network might configure the measurement cycle of the MTC equipment as infinity (that is, no measurement) and set the MTC equipment as not reporting the location update or the routing area update, and so on, that is, the MTC equipment does not need to measure, update its location or update the routing area in the case of no movement; in the case that the MTC equipment moves slowly (the level of the mobility related information is moving with low speed), the access network can configure the MTC equipment as using relatively large measurement cycle, location update cycle and routing area update cycle (for example, the cycle is any value greater than or equal to 6 minutes); when the MTC equipment moves with normal speed (the level of mobility related information is moving with normal speed), the access network can configure the MTC equipment as using the configuration parameters of a mobile terminal with normal speed, for example, the measurement cycle, the location updating cycle and the routing area update cycle can be configured as any value greater than or equal to 1 minute while less than six minutes; when the MTC equipment moves with high speed (the level of the mobility related information is moving with high speed), the access network can configure the MTC equipment as using the configuration parameters of a mobile terminal with high speed, for example, the measurement cycle, the location updating cycle and the routing area update cycle are configured as any value greater than or equal to half a minute while less than one minute.

It should be noted is that, the measurement cycle, the location updating cycle and the routing area update cycle might not be configured as the same value.

Of course, the access network might only configure one or two of the three parameters: the measurement cycle, the location updating cycle, and the routing area update cycle.

Wherein, the contents contained in the configuration parameters of the mobile terminal with normal speed and the configuration parameters of the mobile terminal with high speed are the existing technology and can be found in the relevant standards, and are not repeated here. With the access network sending a system message or measurement configuration message to the MTC equipment, the MTC equipment is able to acquire the configuration parameters.

Wherein, when the speed is less than 3 km/h, it can be considered as moving with low speed; when the speed is between 3~120 km per hour, it can be considered as moving with normal speed; when the speed is greater than 120 km/h, it can be considered as moving with high speed.

Wherein, specifically, the RRC connection establishment request or the RRC connection establishment completion message is received and parsed in the UTRAN or the E-UTRAN, the entity optimizing the configuration of the MTC equipment might be the radio network controller (RNC).

### The second embodiment:

FIG. 4 is a schematic diagram of the access network acquiring the mobility related information of the MTC equipment from the core network or the MTC server, specifically the process comprises the following steps:
step 401: the UTRAN or the E-UTRAN acquires the mobility related information of the MTC equipment from the core network or the MTC server;
step 402: after the UTRAN or the E-UTRAN acquires the mobility related information of the MTC equipment, it optimizes the configuration of the MTC equipment according to different levels of the mobility related information, for example, when the MTC equipment does not move (the level of the mobility-related information is static), the access network configures the measurement cycle of the MTC equipment as infinity and sets the MTC equipment as not reporting the location update or the routing area update, and so on, that is, the MTC equipment does not need to measure, update the location or update the routing area in the case of no movement; in the case that the MTC equipment moves slowly (the level of the mobility related information is moving with low speed), the access network can configure the MTC equipment as using relatively large measurement cycle, location updating cycle and routing area update cycle (for example, the aforementioned cycle is greater than 6 minutes); when the MTC equipment moves with normal speed (the level of mobility related information is moving with normal speed), the access network can configure the MTC equipment as using the configuration parameters of the mobile terminal with normal speed; when the MTC equipment moves with high speed (the level of the mobility related information is moving with high speed), the access network can configure the MTC equipment as using the configuration parameters of the mobile terminal with high speed.

Of course, the access network might only configure one or two of the three parameters: the measurement cycle, the location update cycle, and the routing area update cycle.

Wherein, the contents contained in the configuration parameters of the mobile terminal with normal speed and the configuration parameters of the mobile terminal with high speed are the existing technology, can be found in the relevant standards, and are not repeated here. With the access network sending a system message or measurement configuration message to the MTC equipment, the MTC equipment is able to acquire the configuration parameters.

Wherein, when the speed is less than 3 km/h, it can be considered as moving with low speed; when the speed is between 3~120 km per hour, it can be considered as moving with normal speed; when the speed is greater than 120 km/h, it can be considered as moving with high speed.

Specifically, the UTRAN or the E-UTRAN acquires the mobility related information of the MTC device, the entity optimizing the configuration of the MTC equipment might be the RNC; the entity storing the mobility related information of the MTC equipment in the core network is the home location register (HLR) as well as the Home Subscriber Server (HSS).

### The third embodiment

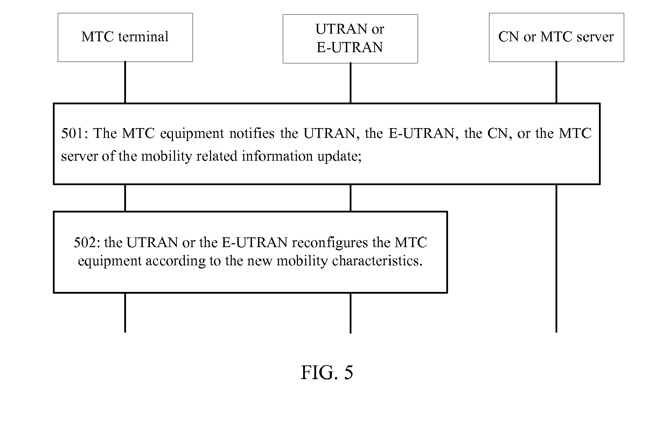

FIG. 5 is a schematic diagram of the MTC equipment notifying the access network, the core network or the MTC server of the new mobility related information update when the mobility related information changes.
Step 501: when the mobility related information of the MTC equipment changes, the MTC equipment notifies the UTRAN, the E-UTRAN, the CN, or the MTC server of the new mobility related information;
step 502: the UTRAN or the E-UTRAN reconfigures the configuration parameters of the MTC equipment according to the new mobility related information.

Preferably, the system for dynamically optimizing the configuration of the MTC equipment in accordance with the embodiment of the present invention comprises the MTC equipment and the access network; the MTC equipment is configured to: report its own mobility related information to the access network; and use the access network to receive the configuration parameters; the access network is configured to: configure the configuration parameters of the MTC equipment according to the obtained mobility related information of the MTC equipment, and send it to the MTC equipment, where the configuration parameters comprise the measurement cycle and/or the location updating cycle and/or the routing area update cycle.

Preferably, the system for dynamically optimizing the configuration of the MTC equipment in accordance with the embodiment of the present invention comprises the MTC equipment and the access network; the access network is configured to: acquire the mobility related information of the MTC equipment from the core network or the MTC server that stores the mobility related information of the MTC equipment, configure the configuration parameters of the MTC equipment according to the obtained mobility related information of the MTC equipment and send them to the MTC equipment, the configuration parameters comprise the measurement cycle and/or the location updating cycle and/or the routing area update cycle; the MTC equipment is configured to: use the access network to receive the configuration parameters.

This embodiment also provides MTC equipment, which comprises:
a receiving module, configured to: receive the configuration parameters of the MTC equipment configured by the access network and sent to the MTC equipment by the access network according to the mobility related information of the MTC equipment, the configuration parameters comprise one or more of the measurement cycle, the location updating cycle and the routing area update cycle; and
a using module, configured to: use the access network to receive the configuration parameters.

Preferably, the MTC equipment also comprises:
a reporting module, configured to: report its own mobility related information to the access network.

The present embodiment also provides an access network equipment, comprising:
an information acquisition module, configured to acquire the mobility related information of the MTC equipment from the MTC equipment, or the core network or the MTC server that stores the mobility related information of the MTC equipment;
a configuration module, configured to: configure the configuration parameters of the MTC equipment based on the obtained mobility related information of the MTC equipment; and
a sending module, configured to: send the configuration parameters of the MTC equipment to the MTC equipment; wherein, the configuration parameters comprise: one or more of the measurement cycle, the location updating cycle, and the routing area update cycle .

Of course, the present invention might have a variety of other embodiments, and without departing from the spirits and essences of the present invention, those skilled in the field can make a variety of corresponding changes and modifications for the present invention, and all these changes and modifications should belong to the protection scope of the claims appended in the present invention.

### Industrial Applicability

The present invention enables the access network to acquire the mobility related information of the MTC equipment, so as to perform configuration optimization such as reducing unnecessary measurement, mobility management, and so on.

## Claims

1. A method for acquiring mobility related information of an equipment to obtain the mobility related information of a machine type communication (MTC) equipment, the method comprising:
the MTC equipment reporting the mobility related information thereof to an access network; or
the access network acquiring the mobility related information of the MTC equipment from a core network or a MTC server that stores the mobility related information of the MTC equipment.

2. The method of claim 1, wherein, the access network is a Universal Terrestrial Radio Access Network (UTRAN) or an Evolved Universal Terrestrial Radio Access Network (E-UTRAN).

3. The method of claim 1, wherein:
the step of the MTC equipment reporting the mobility related information thereof to an access network comprises:
the MTC equipment initiating a Radio Resources Control (RRC) connection establishment request or a RRC connection establishment completion message to the access network, wherein, the request and the message include the MTC equipment's own mobility related information.

4. The method of claim 1, wherein:
the mobility related information comprises: a level of the mobility related information;
the level of the mobility related information of the MTC equipment is one of the following types:
static, moving with low speed, moving with normal speed, and moving with high speed.

5. The method of any one of claims 1~4, the method further comprising:
when the mobility related information of the MTC equipment changes, the MTC equipment notifying one or more of the access network, the core network and the MTC server of the new mobility related information.

6. A method for optimizing configuration of a machine type communication (MTC) equipment, applied to dynamically optimize the configuration of the MTC equipment, and the method comprising:
the MTC equipment reporting mobility related information thereof to an access network; or the access network acquiring the mobility related information of the MTC equipment from a core network or a MTC server that stores the mobility related information of the MTC equipment; and
the access network configuring configuration parameters of the MTC equipment according to the obtained mobility related information of the MTC equipment; wherein,
the configuration parameters comprises one or more of measurement cycle, location updating cycle and routing area update cycle.

7. The method of claim 6, wherein:
the step of the MTC equipment reporting mobility related information thereof to an access network comprises:
the MTC equipment initiating a Radio Resources Control (RRC) connection establishment request or a RRC connection establishment completion message to the access network, wherein the request and the message includes the MIT equipment's own mobility related information.

8. The method of claim 6, wherein:
the mobility related information comprises: a level of the mobility related information;
the level of the mobility related information of the MTC equipment is one of the following types:
static, moving with low speed, moving with normal speed, and moving with high speed.

9. The method of claim 8, wherein:
when the configuration parameters comprise measurement cycle, location updating cycle and routing area update cycle:
if the access network knows that the level of the mobility related information of the MTC equipment is static, the access network configures the measurement cycle of the MTC equipment as infinite, and sets the MTC equipment as not reporting the location update or routing area update;
if the access network knows that the level of the mobility related information of the MTC equipment is moving with low speed, the access network configures the MTC equipment as using relatively large measurement cycle, location updating cycle, and routing area update cycle; if the access network knows that the level of mobility related information of the MTC equipment is moving with normal speed, the access network configures the MTC equipment as using configuration parameters of a mobile terminal with normal speed;
if the access network knows that the level of the mobility related information of the MTC equipment is moving with high speed, the access network configures the MTC equipment as using the configuration parameters of a mobile terminal with high speed.

10. The method of any one of claims 6-9, wherein, further comprising:
when the mobility related information of the MTC equipment changes, the MTC equipment notifying new mobility related information to one or more of the access network, the core network and the MTC server;
the access network acquiring the new mobility related information, and according to the obtained new mobility related information, reconfiguring the configuration parameters of the MTC equipment.

11. A Machine type communication (MTC) equipment, comprising:
a receiving module, configured to: receive configuration parameters of the MTC equipment configured by an access network and sent to the MTC equipment by the access network according to mobility related information of the MTC equipment, wherein the configuration parameters comprise one or more of the measurement cycle, the location updating cycle and the routing area update cycle; and
a using module, configured to: the MTC equipment is used to report the mobility related information thereof to the access network; use the access network to receive the configuration parameters.

12. The MTC equipment of claim 11, further comprising:
a reporting module, configured to: report the MIC equipment's own mobility related information to the access network.

13. An access network equipment, comprising:
an information acquisition module, configured to acquire mobility related information of a Machine type communication (MTC) equipment from the MTC equipment, or a core network or a MTC server that stores the mobility related information of the MTC equipment;
a configuration module, configured to: configure configuration parameters of the MTC equipment based on obtained mobility related information of the MTC equipment; and
a sending module, configured to: send the configuration parameters of the MTC equipment to the MTC equipment; wherein, the configuration parameters comprise: one or more of measurement cycle, location updating cycle, and routing area update cycle.
